# EUROPEAN PATENT APPLICATION

(11) **EP 4 506 388 A1**
(43) Date of publication of application: **12.02.2025**
(21) Application number: 23190909.4
(22) Date of filing: 10.08.2023
(51) Int. Cl.: C08G 18/08, C08G 18/10, C08G 18/34, C08G 18/42, C08G 18/66, C08G 18/75, C09D 175/06

(54) **PROCESS TO INCORPORATE OILS INTO A POLYMER COATING**

(71) Applicant: Covestro LLC, Pittsburgh, PA 15205-9741 (US)
(72) Inventor: The designation of the inventor has not yet been filed
(74) Representative: Levpat

(57) **Abstract**

A process for preparing an polyurethane aqueous dispersion comprises (I) preparing a polyurethane pre-polymer comprising as building blocks: (a) a polyisocyanate, preferably comprising at least two cyclic groups, (b) a polyol, preferably comprising at least one polyol selected from the group consisting of polyester polyols, polyether polyols, polycarbonate polyols, and (c) an acid that comprises at least one isocyanate reactive group; (II) adding (e) an oil, preferably tung oil added in an amount of 20 - 50 wt. % of the polyurethane prepolymer; (III) cooking and optionally mixing the polyurethane prepolymer and the oil for 20 minutes to 10 hours, at a temperature of 30 - 130 °C, preferably for 30 minutes to 8 hours, at a temperature of 50 - 100 °C; and (IV) combining water with the polyurethane prepolymer, wherein a majority of the water that is added to the dispersion is added after the addition of a majority of the oil.

## Description

The present invention relates to the field of coatings from polymers, specifically polyurethane dispersions with one or more oils incorporated into the dispersion to create a stable coating. The present invention also relates to incorporating tung oil into a polyurethane dispersion to create a stable coating having a low gloss effect.

### Background

Aqueous polyurethane dispersions, also known as PUDs, and their application in coatings are well known in the art. It is well known in the coating industry that polyurethane binders can be applied to a variety of substrates to provide coatings with good mechanical and chemical resistances.

Water-dispersible polyurethanes are made using at least one organic polyisocyanate, at least one organic polyol and a compound designed to provide stability to the dispersion in water. To increase molecular weight, they are usually chain extended after dispersion in water. The chain extension can be accomplished by allowing the terminal isocyanate groups of an isocyanate-terminated polyurethane prepolymer to react with water or by adding a diamine to the initial dispersion that will react more rapidly than water with the isocyanate groups.

Oils come in many varieties, and serve many different purposes. Many oils occur naturally, and thus may increase the naturally-occurring content, or decrease the petroleum-based content of a formulation to which it is added. Many oils are also lighter in weight for the volume for which they displace, making their addition useful in creating a lighter formulation. Also, oils can be less expensive to source than many other components, and can thus lower the cost of a formulation incorporating the oil. Finally, many oils have properties that can actually affect how a formulation may perform, appear or even smell when used in a formulation.

Tung oil, also known as China wood oil, is a drying oil obtained by pressing the seed from the nut of the tung tree (Vernicia fordii). Tung oil hardens upon exposure to air, and the resulting coating is transparent and has a deep, almost wet look. Tung oil has been used for finishing or protecting wood, after numerous coats the finish can even look plastic-like. Related drying oils include linseed, safflower, poppy and soybean oils, but none are believed to create the same low gloss effect as tung oil. The oil and its use are believed to have originated in ancient China. Raw tung oil tends to dry to a fine wrinkled finish. When applied to surfaces, it can create a low gloss, or wrinkly look, to the coating after drying. Typically, tung oil is applied on top of a surface to create this effect, or it is mixed in to a stain, or a paint, to create this effect.

Polyurethane dispersions that are meant to be applied to create coatings, differ from these other uses of tung oil in several different ways. First, polyurethane dispersions are created to be stable, so they can be shipped and stored, and do not require mixing just before their application. Many polyurethane dispersions can be hydrophobic, leading them to separate over time in an aqueous solution. The addition of other components may also affect that stability, especially with additional components that are also hydrophobic. In addition many coating applications for polyurethane dispersions are intended to withstand high heat and humidity in outdoor environments, for extended periods of time. The addition of other ingredients into the polyurethane dispersion may affect how the coating endures when tested under heat weathering conditions. Furthermore, other oils may also benefit from being incorporated in a polyurethane dispersion.

Accordingly, there exists a need to create a method to incorporate one or more oils in a polyurethane dispersion, in a manner that would offer stability when stored over time, or when subjected to high heat conditions. In addition, there is a need to incorporate tung oil into a dispersion to achieve these benefit, and also a low gloss effect upon a coated surface.

### Summary of the Invention

A process for preparing an polyurethane aqueous dispersion comprises (I) preparing a polyurethane pre-polymer comprising as building blocks: (a) a polyisocyanate, preferably comprising at least two cyclic groups, (b) a polyol, preferably comprising at least one polyol selected from the group consisting of polyester polyols, polyether polyols, polycarbonate polyols, and (c) an acid that comprises at least one isocyanate reactive group; (II) adding (e) an oil, preferably tung oil added in an amount of 20 - 50 wt. % of the polyurethane prepolymer; (III) cooking and optionally mixing the polyurethane prepolymer and the oil for 20 minutes to 10 hours, at a temperature of 30 - 130 °C, preferably for 30 minutes to 8 hours, at a temperature of 50 - 100 °C; and (IV) combining water with the polyurethane prepolymer, wherein a majority of the water that is added to the dispersion is added after the addition of a majority of the oil.

In an embodiment, the acid that contains at least one isocyanate reactive group is selected from the group consisting of 2,2-dimethylol propionic acid (DMPA), 2,2-dimethylolbutanoic acid (DMBA), 12-hydroxy-9-cis-octadecenoic acid (ricinoleic acid) and mixture thereof. In another embodiment, the acid that contains at least one isocyanate reactive group comprises an ionic water-dispersing group, which preferably has the following structural formula (1) 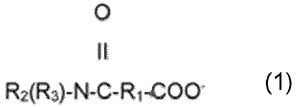 wherein R1 is a divalent aliphatic hydrocarbon radical having from 2 to 8 carbon atoms, preferably from 3 to 6 carbon atoms, more preferably 3 or 4 carbon atoms or a divalent cycloaliphatic hydrocarbon radical having from 6 to 8 carbon atoms or a divalent aromatic hydrocarbon radical having from 6 to 8 carbon atoms, R2 and R3 are both 2-hydroxypropyl.

In a different embodiment, the polyurethane aqueous dispersion further comprises (d) a reactive diluent, preferably wherein the reactive diluent comprises vinyl monomers selected from at least one member of the group containing free vinyl acids, esters of (meth)acrylic acid, hydroxy alkyl (meth)acrylates and styrene and optionally wherein the reactive diluent is a building block of the prepolymer. The reactive diluent may comprise vinyl monomers and the process may further comprise the step of vinyl monomer polymerization, and the step of vinyl monomer polymerization may be carried out in-situ by free radical addition polymerization of the vinyl monomer, and not carried out until after step (I) of preparing the polyurethane pre-polymer.

In yet another embodiment, component (e) comprises at least 50% natural oil, preferably at least 75% natural oil, more preferably at least 90% natural oil, most preferably at least 100% natural oil, and the oil is compatible and non-reactive with the prepolymer. In addition, the oil may be added after the at least components (a) and (b) of the polyurethane pre-polymer are mixed and heated.

In still another embodiment, at least components (a) and (b) of the polyurethane pre-polymer mixed and heated to 40 - 95 °C, for 30 minutes - 4 hours. In another, the building blocks of the prepolymer have an NCO:OH ratio of from 0.8:1.0 to 3.0:1.0. In a different embodiment, the process further comprises reacting the polyurethane pre-polymer with component (f) an active hydrogen-containing chain extender in the aqueous phase, preferably selected from the group consisting of amino-alcohols, primary polyamines, secondary polyamines, hydrazine, substituted hydrazines and substituted hydrazides.

In another embodiment, the polyurethane aqueous dispersion further comprises as compound (d) a vinyl monomer, and the process further comprises the steps of chain extension and vinyl monomer polymerization, and wherein the step of vinyl monomer polymerization is carried out in-situ by free radical addition polymerization of the vinyl monomer, and is not carried out until after the step of chain extension has been carried out. In an embodiment not yet disclosed, a surfactant is further added to the polyurethane aqueous dispersion, in an amount of 5 - 30 wt. %, of the amount of the oil, and preferably the surfactant is hydrophobic and non-ionic. In another, a drying agent is further added to the polyurethane aqueous dispersion. In still another, a hydrophobic co-solvent is further added to the polyurethane aqueous dispersion, wherein the hydrophobic co-solvent is preferably selected from the group selected from dipropylene glycol n-butyl ether (DPnB), tripropylene glycol n-butyl ether (TPnB), propylene n-butyl ether (PnB) and propylene glycol.

In other embodiments, at least 70 wt. % of the water that is added to the dispersion is added after the addition of at least 70 wt. % of the oil, preferably at least 90 wt. % of the water that is added to the dispersion is added after the addition of at least 90 wt. % of the oil. In different embodiments, the process comprises dispersed particles comprising the polyurethane prepolymer in an amount of from 20 to 60 wt.%, more preferably from 35 to 58 wt.%, even more preferably from 40 to 57 wt.%, most preferably from 45 to 55 wt. % relative to the aqueous dispersion.

In yet other embodiments, the process further comprises the step of applying the polyurethane aqueous dispersion to a substrate, and may include further comprising the step of drying the polyurethane aqueous dispersion upon the substrate. In addition, a method of reducing gloss to the surface of the substrate in the process described above, wherein the oil is tung oil.

### Detailed Description of the Invention

The object of the present invention has been achieved by preparing a polyurethane with oil incorporated into a prepolymer. Methods for preparing polyurethanes are known in the art and are described in for example the Polyurethane Handbook 2^{nd} Edition, a Carl Hanser publication, 1994, by G. Oertel. The polyurethane may be prepared in a conventional manner by reacting at least (a), (b) and (c) by methods well known in the prior art. Usually an isocyanate-terminated polyurethane pre-polymer is first formed by the reaction of components (a), (b), (c) and optionally (d), into which a plant oil and optionally several other components are mixed.

Oils have been found to separate from the polyurethane resin in an aqueous dispersion when blended to form a PUD, as each of these components are hydrophobic. This makes the dispersion unstable, requiring frequent remixing to maintain the dispersion. Its application in the resulting coating becomes uneven, as the oil is separated from the polyurethane. This approach is found to create a coating that is unstable over time, and after being exposed to higher temperatures.

While adding additional surfactant may assist in keeping the oil suspended in the dispersion, a large amount of surfactant will make the dispersion properties more water sensitive and may interfere with the blended dispersion performance properties. All percentages listed below are in weight percent (wt. %) of the polyurethane dispersion, unless specified otherwise.

### Polyurethane Prepolymer

The polyurethane prepolymer comprises as building blocks at least components (a), (b) and (c).

### Component (a)

Component (a) is a polyisocyanate. The polyisocyanate may contain at least two cyclic groups. Cyclic is defined here as a closed ring of carbon atoms, either aromatic or aliphatic. Preferably component (a) is a diisocyanate. Component (a) is preferably a polyisocyanate containing at least two cycloaliphatic groups, a polyisocyanate containing at least two aromatic groups, a polyisocyanate containing at least one cycloaliphatic group and at least one aromatic group, and any mixture thereof. More preferably, component (a) is a polyisocyanate containing at least two cycloaliphatic groups.

The polyisocyanate containing at least two aromatic groups is preferably a polyisocyanate containing at least two aromatic C6 groups and even more preferably contains two aromatic C6 groups. Non-limiting examples of component (a) containing at least two aromatic groups are methylene bis(phenyl isocyanate) (all isomers) and 3,3'-dimethyl-4,4'-biphenylene diisocyanate (CAS number 91-97-4). More preferably, the polyisocyanate containing at least two aromatic groups is methylene bis(phenyl isocyanate) (all isomers). Even more preferably, the polyisocyanate containing at least two aromatic groups is a mixture of 4,4'-methylene bis(phenyl isocyanate) and 2,4'-methylene bis(phenyl isocyanate).

More preferably, component (a) is a polyisocyanate containing at least two cycloaliphatic groups and even more preferably containing two cycloaliphatic groups. Even more preferably, component (a) is a polyisocyanate containing at least two cyclohexane groups and even more preferably containing two cyclohexane groups. Preferred examples of a polyisocyanate containing at least two cyclohexane groups is dicyclohexylmethane diisocyanate (all isomers). Even more preferably, component (a) is H12MDI (CAS number 5124-30-1).

In another embodiment, the polyisocyanate contains at least two free isocyanate groups. Preferably the polyisocyanate comprises at least one diisocyanate Y(NCO)₂. Such organic diisocyanate may be an aliphatic (which term includes cycloaliphatic), araliphatic or aromatic polyisocyanate. Preferably, Y represents a divalent aliphatic hydrocarbon radical having from 4 to 10 carbon atoms, more preferably from 5 to 9 carbon atoms, a divalent cycloaliphatic hydrocarbon radical having from 6 to 13 carbon atoms, more preferably from 8 to 13 carbon atoms, a divalent aromatic hydrocarbon radical having from 6 to 13 carbon atoms or a divalent araliphatic hydrocarbon radical having from 7 to 15 carbon atoms.

Examples of suitable aliphatic polyisocyanates include ethylene diisocyanate, 1,6-hexamethylene diisocyanate (HDI), isophorone diisocyanate, cyclohexane-1,4-diisocyanate, 4,4'-dicyclohexyl methane diisocyanate, cyclopentylene diisocyanate, p-tetra-methylxylene diisocyanate (p-TMXDI) and its meta isomer
(m-TMXDI), hydrogenated 2,4-toluene diisocyanate, hydrogenated 2,6-toluene diisocyanate, 1-isocyanato-1-methyl-3(4)-isocyanatomethyl-cyclohexane (IMCI), pentamethylene diisocyanate and mixtures thereof. Suitable non-aliphatic polyisocyanates include p-xylylene diisocyanate, 1-4-phenylene diisocyanate, 2,4-toluene diisocyanate, 2,6-toluene diisocyanate, 4,4'-diphenylmethane diisocyanate, 2,4-diphenyl methane diisocyanate, 1,5-naththylene diisocyanate and mixtures thereof. Mixtures of aliphatic and aromatic polyisocyanates can be used and also polyisocyanates which have been modified by the introduction of urethane, allophanate, urea, biuret, carbodiimide, uretonimine or isocyanurate residues.

The polyisocyanate is preferably at least one aliphatic diisocyanate. The polyisocyanate is more preferably selected from the group consisting of hexamethylene diisocyanate, isophorone diisocyanate (1-isocyanato-3,3,5-trimethyl-5-isocyanatomethyl-cyclohexane), methylene dicyclohexyl diisocyanate (4,4'-diisocyanato-dicyclohexylmethane), and any mixture of these compounds.

The amount of component (a) relative to the total weight amount of components used to prepare the polyurethane from which the building blocks of the polyurethane are emanated is preferably from 10 to 59 weight percent, more preferably from 15 to 55 weight percent and even more preferably from 20 to 50 weight percent. As used herein, the building blocks of the polyurethane are emanated from components (a), (b), (c) and (f), or as many of these components that may be present. In some cases, component (d) may also be a building block of the polyurethane, as discussed below in association with component (d).

### Component (b)

Component (b) is any polyol that can be used in polyurethane synthesis. As used herein, the number average molecular weight of a hydroxyl group containing component is determined by multiplying the equivalent weight of the component with the OH functionality of the component (the OH functionality of the polyol is given by the supplier; in case the polyol is a diol, the OH functionality is 2). The equivalent weight of the component is calculated by dividing 56100 by the OH number of the component. The OH number of the component is measured by titration a known mass of component according to ASTM D4274 and is expressed as mg KOH/g.

In particular component (b) may be a polyester polyol, a polyesteramide polyol, a polyether polyol, a polythioether polyol, a polycarbonate polyol, a polyacetal polyol, a polyvinyl polyol and/or a polysiloxane polyol. Preferably, component (b) comprises at least one polyol selected from the group consisting of polyester(amide) polyols, polyether polyols, polycarbonate polyols and any mixture thereof. More preferably, component (b) comprises at least one polyol selected from the group consisting of polyester polyols, polyether polyols, polycarbonate polyols and any mixture thereof.

In a preferred embodiment, the polyol (b) is a polyester polyol, polyether polyol and/or polycarbonate polyol optionally in combination with fatty acid residue containing polyol.

The amount of component (b) relative to the total weight amount of components used to prepare the polyurethane from which the building blocks of the polyurethane are emanated is preferably from 15 to 85 weight percent, more preferably from 20 to 80 weight percent and even more preferably from 30 to 70 weight percent.

### Component (c)

Component (c) is an acid that contains at least one isocyanate-reactive group, also referred to as isocyanate-reactive component (c). A preferred isocyanate-reactive group is a hydroxyl group.

Component (c) preferably includes an isocyanate-reactive component containing ionic and/or potentially ionic water-dispersing groups. The amount of isocyanate-reactive component containing ionic or potentially ionic water-dispersing groups relative to the total weight amount of components (a), (b) and (c) used to prepare the polyurethane is usually from 0.5 to 15 wt.%, preferably from 1 to 10 wt.% and even more preferably from 2 to 7 wt. %.

As used herein, potentially anionic dispersing group means a group, which under the conditions of the polyurethane preparation reaction can be converted into an anionic group by salt formation (i.e. deprotonating the group by a base). Preferred ionic water-dispersing groups are anionic water-dispersing groups. Preferred anionic water-dispersing groups are carboxylic, phosphoric and/or sulphonic acid groups. Examples of such components (c) include carboxyl containing diols, for example dihydroxy alkanoic acids such as 2,2-dimethylol propionic acid (DMPA), 2,2-dimethylolbutanoic acid (DMBA) or Ricinoleic acid, also known as 12-hydroxy-9-cis-octadecenoic acid, an unsaturated fatty acid derived from castor oil. Alternatively sulphonic acid groups may be used as potentially anionic water-dispersing groups.

In an embodiment, the component comprising the ionic water-dispersing group has the following structural formula (1) 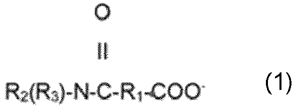 Wherein
R1 is a divalent aliphatic hydrocarbon radical having from 2 to 8 carbon atoms, preferably from 3 to 6 carbon atoms, more preferably 3 or 4 carbon atoms or a divalent cycloaliphatic hydrocarbon radical having from 6 to 8 carbon atoms or a divalent aromatic hydrocarbon radical having from 6 to 8 carbon atoms, R2 and R3 are both 2-hydroxypropyl. Preferably, the carboxylic-acid bearing compound having the structural formula (1) is the reaction product of at least diisopropanol amine and one cyclic acid anhydride. The cyclic acid anhydride is preferably selected from the group consisting of succinic anhydride, glutaric anhydride, tetrahydrophthalic anhydride, hexahydrophthalic anhydride, phthalic anhydride and any mixture thereof. More preferably, the cyclic acid anhydride is selected from the group consisting of glutaric anhydride, tetrahydrophthalic anhydride, hexahydrophthalic anhydride and any mixture thereof. Most preferably, the cyclic acid anhydride is glutaric anhydride. Most preferably, the carboxylic acid-bearing compound having the structural formula (1) is the reaction product of glutaric anhydride and diisopropyl amine.

The anionic water-dispersing groups are preferably fully or partially in the form of a salt. Conversion to the salt form is optionally effected by neutralization of the polyurethane pre-polymer with a base, preferably during the preparation of a polyurethane pre-polymer and/or during the preparation of the aqueous composition of the present invention. If the anionic water-dispersing groups are neutralized, the base used to neutralize the groups is preferably ammonia, an amine or an inorganic base. Suitable amines include tertiary amines, for example triethylamine or N,N-dimethylethanolamine. Suitable inorganic bases include alkali hydroxides and carbonates, for example lithium hydroxide, sodium hydroxide, or potassium hydroxide. A quaternary ammonium hydroxide, for example N⁺(CH₃)₄(OH), can also be used. Generally a base is used as neutralizing agent which gives counter ions that may be desired for the composition. For example, preferred counter ions include Li⁺, Na⁺, K⁺, NH₄⁺ and substituted ammonium salts. Cationic water dispersible groups can also be used, but are less preferred. Examples include pyridine groups, imidazole groups and/or quaternary ammonium groups which may be neutralized or permanently ionized (for example with dimethylsulphate). A very suitable isocyanate-reactive component containing ionic or potentially ionic water-dispersing groups is dimethylol propionic acid (DMPA). The neutralizing agent is preferably used in such an amount that the molar ratio of the ionic and potentially ionic water dispersing groups to the neutralizing groups of the neutralizing agent are in the range of from 0.3 to 1.5, more preferably from 0.4 to 1.2 and even more preferably from 0.5 to 0.98.

### Component (d)

In another embodiment of the invention, there is an addition and subsequent polymerization of a reactive diluent, referenced here as component (d). In particular where the reactive diluent comprises olefinically unsaturated monomers (also known as vinyl monomers) these may be polymerised in-situ to prepare a vinyl polymer. Suitable vinyl monomers include but are not limited to (meth)acrylic acid, fumaric acid, itaconic acid, monoalkyl itaconates, dialkyl itaconates (including but not limited to dimethyl itaconate, diethyl itaconate or dibutyl itaconate), 1,3-butadiene, isoprene, styrene, α-methyl styrene, divinyl benzene, indene, acrylonitrile, methacrylonitrile, vinyl halides such as vinyl chloride, vinyl esters such as vinyl acetate, vinylpropionate, vinyl laurate, vinyl esters of versatic acid, heterocyclic vinyl compounds, alkyl esters of mono-olefinically unsaturated dicarboxylic acids (such as di-n-butyl maleate and di-n-butyl fumarate) and, in particular, esters of (meth)acrylic acid of formula CH2=CR1-COOR2 wherein R1 is H or methyl and R2 is optionally substituted alkyl or cycloalkyl of 1 to 20 carbon atoms (more preferably 1 to 8 carbon atoms) examples of which are methyl (meth)acrylate, ethyl (meth)acrylate, trifluorethyl (meth)acrylate, n-butyl (meth)acrylate, 2-ethylhexyl (meth)acrylate, isopropyl (meth)acrylate, n-propyl (meth)acrylate, and hydroxyalkyl (meth)acrylates such as 2-hydroxyethyl (meth)acrylate, 2-hydroxypropyl (meth)acrylate and 4-hydroxybutyl (meth)acrylate.

Preferably the reactive diluent comprises vinyl monomers selected from at least one member of the group containing free vinyl acids, esters of (meth)acrylic acid, hydroxy alkyl (meth)acrylates and styrene.

All of the vinyl monomers may be present at the commencement of the preparation of the isocyanate-terminated prepolymer or some or all of the vinyl monomers may be added during the course of the preparation. All or some of the vinyl monomers may also be added after the preparation completion of the isocyanate-terminated prepolymer or all or some of the vinyl monomers may be added at any point after the prepolymer dispersion is completed.

In an embodiment, the vinyl monomers are not polymerized until after the polyurethane prepolymer is dispersed in water and optional chain extension has been carried out.

### Component (e)

One or more oils may be added to the prepolymer as component (e), either after components (a) and (b) are mixed and optionally heated, but before component (c) is added, or the oil may also be added after each of components (a), (b) and (c) are mixed and optionally heated. As used herein, oils are glyceride-based, non-petroleum-derived oils, that are produced by expression in plants or animals, including without limitation vegetable oils, animal fats, and algal oils, and fatty acid or fatty ester derivatives from such oils. The oils may be raw, or boiled. An advantage of using boiled oils is the drying time of the resulting coating can be shortened considerably. In addition, metallic drying agents, or driers, may be added to the oil to speed the introduction of oxygen into the oil, which may promote crosslinking and curing. In addition, oils may be modified in a manner that it is not 100% natural. For example, the oil may be grafted onto another material, the oil may be hydrogenated, or modified in another manner. Preferably, the oil will be compatible and non-reactive with the prepolymer. In a preferred embodiment, the oil comprises at least 50% natural oil, or at least 75% natural oil, or at least 90% natural oil, or 100% natural oil.

Oils may be added in an amount of greater than 0% up to 50% of the polyurethane, preferably 5-30%, most preferably 10-15% by weight of the total of components (a), (b), (c) and (d). When Tung oil is incorporated, the Tung oil is added in an amount of 20-50% by weight of the total of components of (a), (b), (c) and (d). Too little tung oil may not create the desired low gloss effect on the coated surface, while adding too much may result in the plant oil separating out of the polymer. Other oils that may be added include flax linseed oil, neem oil, castor oil, refined linseed oil, refined soybean oil, mustard oil, and boiled linseed oil.

Preferably, the oil is added before any water in creating the dispersion. This method has been surprisingly found to capture the oil with the polyurethane particles. Both the polyurethane and the oils are hydrophobic, and are unlikely to be separated from each other while in the aqueous dispersion that will be created, if they are mixed together before water is added.

### Preparation of the prepolymer

The prepolymer may be prepared by mixing and optionally heating the components (a), (b), (c) and optionally (d). The prepolymer may be prepared in the presence of the oil (e). Additional components may be added to the prepolymer cook, including a solvent, such as acetone or methylethylketone (MEK), which can lower the viscosity during the prepolymer cook. The prepolymer may be heated to 40 - 95 C. In other embodiments, the prepolymer may be heated to 50-55 C, or 70-78 C, for a period of time ranging from 30 minutes to 4 hours. In some embodiments, the heating takes place for 1 to 1.5 hours, in others from 2 to 3 hours. In an embodiment, the prepolymer is prepared from components (a) and (b), and component (c) is added and reacted after components (a) and (b) have reacted. In another embodiment, the prepolymer is prepared from components (a), (b) and (c) added and reacted together.

The term "prepolymer phase" used herein, is when all of the materials or reaction products for the polyurethane may be present except water. The prepolymer phase occurs before water is added. Other materials may be present in the prepolymer phase, such as the oil, surfactant and drying agent. In an embodiment, the NCO:OH ratio of the prepolymer is in the range of from 0.8:1.0 to 3.0:1.0.

### Preparing the Dispersion with Component (f) and Further Components

The aqueous polyurethane composition may be prepared by dispersing the isocyanate-terminated polyurethane prepolymer and oil, optionally carried in an organic solvent medium and/or in the optional reactive diluent (d), in an aqueous medium and chain extending the prepolymer with component (f) at least one active hydrogen-containing chain extender in the aqueous phase, with optionally a surfactant and optionally a drying agent. The aqueous phase occurs after water is added, and may include any water miscible components used in preparing the polyurethane dispersion. The dispersion phase occurs when the prepolymer phase is mixed with water, and may contain the prepolymer, the subsequently formed chain-extended polyurethane described below, or other water immiscible components used to prepare the polyurethane dispersion. The dispersion includes the dispersed phase and the aqueous phase.

Active hydrogen-containing chain extenders which may be reacted with the isocyanate-terminated polyurethane prepolymer include amino-alcohols, primary or secondary diamines or polyamines, hydrazine, and substituted hydrazines.

Examples of such chain extenders useful herein include alkylene diamines such as ethylene diamine and cyclic amines such as isophorone diamine. Also materials such as hydrazine, azines such as acetone azine, substituted hydrazines such as, for example, dimethyl hydrazine, 1,6-hexamethylene-bis-hydrazine, carbodihydrazine, hydrazides of dicarboxylic acids and sulphonic acids such as adipic acid mono- or dihydrazide, oxalic acid dihydrazide, isophthalic acid dihydrazide, hydrazides made by reacting lactones with hydrazide such as gammahydroxylbutyric hydrazide, bis-semi-carbazide, and bishydrazide carbonic esters of glycols may be useful. Water itself may be effective as an indirect chain extender. Another suitable class of chain extending compounds are the so-called "Jeffamine" compounds with a functionality of 2 or 3 (available from Huntsman). These are PPO or PEO-based di or triamines, e.g. "Jeffamine" T403 and "Jeffamine" D-400. Preferably the active-hydrogen chain extending compound is selected from the group comprising water, amino-alcohols, primary or secondary diamines or polyamines, hydrazine, substituted hydrazines and substituted hydrazides.

Where the chain extender is other than water, for example, a polyamine or hydrazine, it may be added to the aqueous dispersion of the isocyanate-terminated polyurethane prepolymer or, alternatively, it may already be present in the aqueous medium when the isocyanate-terminated polyurethane prepolymer is dispersed therein. The isocyanate-terminated polyurethane prepolymer may also be chain extended to form the polyurethane while dissolved in organic solvent (usually acetone) followed by the addition of water to the solution until water becomes the continuous phase and the subsequent removal of the solvent by distillation to form an aqueous dispersion. The 'continuous phase' refers to the liquid in the dispersion in which the particles containing the polyurethane and other materials which are not miscible in the continuous phase are dispersed. Once the dispersion in water is formed, the continuous phase and the aqueous phase are the same.

The chain extension may be conducted at convenient temperatures from about 5° C. to 95° C. or, more preferably, from about 10° C. to 60° C.

The total amount of active-hydrogen chain extending compound employed (apart from water) should be such that the ratio of active hydrogens in the chain extender to isocyanate groups in the polyurethane prepolymer preferably is in the range from 0.1:1 to 2.0:1 more preferably 0.80:1 to 1.7:1.

In the embodiment where the optional reactive diluent (d) is present and comprises a vinyl monomer, the polymerization of any vinyl monomer will require the use of a free-radical-yielding initiator to initiate the vinyl polymerization. Suitable free-radical-yielding initiators include inorganic peroxides such as ammonium persulphate hydrogen peroxide, organic peroxides, such as benzoyl peroxide, alkyl hydroperoxides such as t-butyl hydroperoxide and cumene hydroperoxide; dialkyl peroxides such as di-t-butyl peroxide; peroxy esters such as t-butyl perbenzoate and the like; mixtures may also be used. The peroxy compounds are in some cases advantageously used in combination with suitable reducing agents (redox systems) such as iso-ascorbic acid. Azo compounds such as azobisisobutyronitrile may also be used. Metal compounds such as Fe.EDTA (EDTA is ethylene diamine tetracetic acid) may also be usefully employed as part of the redox initiator system. The amount of initiator or initiator system to use is conventional, e.g. within the range of 0.05 to 6 wt % based on the weight of vinyl monomer used.

The reactive diluent may be grafted, or partially grafted, onto the polyurethane prepolymer by use of the polymerization technique described above, performed concurrently with the polymerization of the polyurethane prepolymer, or it may be polymerized separately in the aqueous dispersion. In case the reactive diluent is grafted or partially grafted onto the polyurethane prepolymer, and it is a component other than water, then it is considered a building block of the polyurethane prepolymer, and part of the "backbone" of the polyurethane prepolymer.

Such an aqueous vinyl polymerization normally would preferably be performed in the presence of an external stabilising and/or dispersing material such as the surfactants discussed below and the amount used is usually 0.1 to 5% by weight based on the total vinyl monomer used. It has been found that using a surfactant can help with the polymerization and reduce the chances of getting a dispersion with a high sediment level.

The theoretical glass transition temperature, calculated using the Fox equation, of the resultant vinyl polymer may vary within a wide range, a preferred range being from -50 to 120° C., preferably from -20 to 80° C.

After polymerization, the free vinyl monomer content in the aqueous composition of the invention is preferably less than 500 ppm, more preferably less than 300 ppm and more preferably less than 100 ppm.

If a reactive diluent comprising vinyl monomers is used, the ratio of resultant vinyl polymer to crosslinkable polyurethane is preferably in a weight ratio in the range of from 10:90 to 90:10, more preferably 20:80 to 60:40 and most preferably 30:70 to 50:50.

Optionally, a surfactant may be added to the prepolymer, either after components (a) and (b) are mixed and optionally heated, but before component (c) is added, or the surfactant may also be added after each of components (a), (b) and (c) are mixed and optionally heated. In a preferred embodiment, the surfactant is added after the prepolymer cook, and not during the prepolymer cook. The surfactant may also be present in the aqueous phase while the dispersion is being created. The surfactant may be added in an amount of 5-30% of the amount of oil, preferably 10-25%, more preferably 12-20%. Surfactants that may be added include ones that are hydrophobic and non-ionic. An example of a surfactant that may be used is a secondary alcohol ethoxylate.

The HLB of the surfactant used may also be important for certain embodiments of the present invention. HLB (Hydrophilic-lipophilic balance) is the balance of the strength and size of the hydrophilic and lipophilic moieties of a molecule of a surfactant. The HLB scale ranges from 0 to 20, preferably from greater than 0 to less than 10. To have a low gloss coating with the tung oil's wrinkling effect, the HLB is preferred to be <10. HLB >10 tend to pull the oil out of the particle, emulsifying the tung oil and preventing the formation of enough tung oil wrinkling effect which gives the low gloss look.

Optionally, a drying agent may be added to the prepolymer, either after components (a) and (b) are mixed and optionally heated, but before component (c) is added, or the drying agent may also be added after each of components (a), (b) and (c) are mixed and optionally heated. In a preferred embodiment, the drying agent is added after the prepolymer cook, and not during the prepolymer cook. The drying agent may also be present in the aqueous phase while the dispersion is being created. Drying agents that may be used include manganese and iron type drying agents. A drying agent is used to speed up the oxidative curing of oils. The use of tung oil may slow down the drying process of a resulting coating. A drying agent is found to be useful in conjunction with using one of these plant oils to speed up the drying of the resulting coating.

Optionally, a hydrophobic co-solvent may be added to the prepolymer, either after components (a) and (b) are mixed and optionally heated, but before component (c) is added, or the co-solvent may also be added after each of components (a), (b) and (c) are mixed and optionally heated. In a preferred embodiment, the hydrophobic co-solvent is added after the prepolymer cook, and not during the prepolymer cook. The hydrophobic co-solvent may also be present in the aqueous phase while the dispersion is being created. Hydrophobic co-solvents that may be used include dipropylene glycol n-butyl ether (DPnB), tripropylene glycol n-butyl ether (TPnB), propylene n-butyl ether (PnB) and propylene glycol. It has been found that adding some hydrophobic co-solvent may help the oil from slowly leaching out of the urethane particle. The amount of co-solvent used is usually 50-250 grams/ liter aqueous dispersion.

Water is also used to create the dispersion. To make a dispersion, water may be added to the prepolymer and oil mixture under high mixing or agitation; or the prepolymer and oil mixture may be slowly added into water under high mixing to form dispersion particles. As part of the present invention, a majority of the water that is used in the dispersion is added after the addition of a majority of the oil, to allow for the majority of the oil to be incorporated into the urethane within the dispersion, rather than for the majority of the oil to be dispersed within the water apart from most of the urethane particles. In an embodiment, at least 60% of the water is added following at least 60% of the oil. In another embodiment, at least 70% of the water is added following at least 70% of the oil. Preferably, at least 80% of the water is added following at least 80% of the oil. More preferably, at least 90% of the water is added following at least 90% of the oil. Most preferably, 100% of the water is added after all of the oil is added to the dispersion. Other components may optionally be added to the dispersion, including biocides, catalysts, neutralization agents, inhibitors, redox polymerization agents for acrylic monomers, chain extenders and emulsifiers.

The dispersion is typically mixed for a period of time, such as 20 minutes to 10 hours, or 30 minutes to 8 hours, or 1 to 5 hours, and temperatures ranging from 30 - 130 °C, preferably 50 - 100 °C.

The present invention also relates to an aqueous dispersion comprising dispersed particles comprising the polyurethane as defined in the present invention. The dispersed particles are preferably present in the aqueous dispersion in an amount of from 20 to 60 wt.%, more preferably from 35 to 58 wt.%, even more preferably from 40 to 57 wt.%, most preferably from 45 to 55 wt. % relative to the aqueous dispersion, while the viscosity of the dispersion advantageously remains preferably below 1000 mPa.s, more preferably below 800 mPa.s, more preferably below 500 mPa.s and most preferably below 300 mPa.s, the viscosity measured pursuant to ISO 2555:2018. The dispersed particles may further include at least one other polymer which is not the polyurethane according to the invention. Preferably, the at least one other polymer is an addition polymer obtained by the free-radical addition polymerization of at least one vinyl monomer. While such dispersions may include the polyurethane and vinyl polymers as a simple blend of the preformed polymers, it is also known to be more advantageous to form the vinyl polymer in-situ by polymerizing one or more vinyl monomers in the presence of a preformed aqueous polyurethane dispersion. Such in-situ formation of the vinyl polymer can be advantageous in that it may result in greater stability and may further improve the performance of the resulting coating in comparison to simple blending. It would therefore be most desirable to apply the foregoing technology to the provision of an aqueous dispersion of a polyurethane of the type discussed above which additionally incorporates an in-situ formed vinyl polymer.

The present invention therefore further relates to a polyurethane-vinyl polymer hybrid obtained by free-radical polymerization of at least one vinyl monomer in the presence of a polyurethane as described herein above and to an aqueous dispersion comprising dispersed polyurethane-vinyl polymer hybrid particles.

By a polyurethane- vinyl polymer hybrid is meant that a vinyl polymer is prepared by the free-radical polymerization of vinyl monomer(s) in the presence of a polyurethane by forming an aqueous dispersion of said polyurethane resin and polymerizing one or more vinyl monomers to form a vinyl polymer such that said vinyl polymer becomes incorporated in-situ into said aqueous dispersion by virtue of polymerizing vinyl monomer(s) used to form the vinyl polymer in the presence of the polyurethane resin. In an embodiment, the acid number of the polyurethane-vinyl polymer hybrid is within the range of from 5 to 30 mg KOH/g of the polymer hybrid, more preferably from 5.5 to 22 mg KOH/g, even more preferably from 6 to 16 mg KOH and most preferably from 6 to 14 mg KOH/g of the polymer hybrid.

Preferably the weight ratio of polyurethane to vinyl polymer present in the polyurethane vinyl polymer hybrid is in the range of from 95:5 to 15:85, more preferably from 90:10 to 35:65, more preferably from 90:10 to 50:50, most preferably from 90:10 to 65:35.

The present disclosure also includes the following process steps, in the given order. In an embodiment A, (I) a polyurethane pre-polymer comprising components (a), (b), and (c) are prepared in solvent, (II) oil is then added, (III) the prepolymer, oil and solvent mixture is then cooked and optionally mixed, (IV) optionally, the prepolymer is then chain extended with water, and (V) the solvent is then stripped. In an embodiment B, (I) a polyurethane pre-polymer comprising components (a), (b), (c) and (d) (vinyl monomers) are prepared together, optionally in solvent, (II) oil is then added, (III) the prepolymer, oil and optional solvent mixture is brought together with water then cooked and optionally mixed, (IV) optionally, the prepolymer is then chain extended with water, (V) component (d) is then polymerized in the aqueous dispersion, and (VI) optionally, if any solvent is present, the solvent is then stripped. In an embodiment C, (I) a polyurethane pre-polymer comprising components (a), (b) and (c) are prepared together in solvent, (II) oil is then added, (III) component (e) (a diamine chain extender) is then added and mixed with water, (IV) the prepolymer, oil and solvent mixture is brought together with the chain extender and water then cooked and optionally mixed, (V) the prepolymer is then chain extended by the diamine, (VI) the solvent is then stripped. In an embodiment D, (I) a polyurethane pre-polymer comprising components (a), (b) and (c) are prepared together in component (d) (reactive diluent) and optionally a solvent, (II) oil is then added, (III) component (e) (a diamine chain extender) is then added and mixed with water, (IV) the prepolymer, component (d), oil and optional solvent mixture is brought together with the chain extender and water then cooked and optionally mixed, (V) the prepolymer is then chain extended by the diamine, (VI) the reactive diluent is then polymerized in the aqueous dispersion, and (VII) optionally, if any solvent is present, the solvent is then stripped.The present invention further relates to a method for coating a substrate selected from the group consisting of wood, metal, plastic, linoleum, concrete, glass, packaging film and any combination thereof; where the method comprises (i) applying an aqueous coating composition according to the invention or obtained with the process according to the invention to the substrate; and (ii) physically drying of the aqueous coating composition to obtain a coating. The drying may take place by allowing the water and other volatiles to evaporate, or by radiation curing. A filter may be used to assist in the drying process In either case, the coating is allowed to form on a surface.

In an embodiment where tung oil is used in the method described above, the method further comprises reducing the gloss level of the surface, which can be measured at various angles after drying the surface. It is believed that during this drying process, some of the tung oil in the urethane particles or within the dispersion will float to the surface of the coating, which will give the coating a wrinkling effect upon drying, noticeable by the readings of the gloss level upon the dried surface.

### Examples

The present invention is now illustrated by reference to the following examples. Unless otherwise specified, all parts, percentages and ratios are on a weight basis.

### Components and abbreviations used:

| | |
|---|---|
| DPnB | = Dipropylene Glycol n-Butyl Ether (DOWANOL DPnB) from Dow |
| Borchi Oxycoat 1101 | = Iron drier from Borchers |
| Reaxis C716LV | = Bismuth Carboxylate catalyst from Reaxis |
| Desmodur W | = Dicyclohexylmethane-4,4'-diisocyanate available from Covestro |
| TEA | = triethyl amine |
| MEK | = methyl ethyl ketone |
| N2H4 | = Hydrazine monohydrate 98+% available from Sigma-Aldrich Co., diluted to 16% solution with distilled water, for safer handling |
| Diexter G6555-35 | = branched saturated polyester resin from COIM |
| H2O | = Deionized water |
| Raw Tung oil | = 100% natural, from Welch Holme & Clark Co. |
| Refined Linseed oil | = 100% natural, from Gamblin |
| DE FOO 3000 | = Defoamer from Münzing Chemie |
| DMPA | = Dimethylolpropionic acid available from Perstorp polyols |
| Tergitol 15-S-3 | = a secondary alcohol ethoxylate, non-ionic surfactant, from Dow |
| Byk 345 | = polyether modified dimethylpolysiloxane. Improves the substrate wetting of aqueous systems, available from BYK. |
| NCO | = Isocyanate group |
| OH | = Hydroxyl group |

### Inventive Example 1 and Inventive Example 2:

The components below are used to make an isocyanate prepolymer with tung oil added into the prepolymer after the desired reaction cook has been completed and prepolymer has been neutralized and dispersed in water (example 1). The comparison of inventive example 1 is with a similar isocyanate prepolymer where tung oil is substituted with linseed oil and prepolymer has been neutralized and dispersed in water (inventive example 2). The applied dried film coatings from the dispersions of both examples will be compared for their differences in gloss values. Tung oil forms a low gloss coating while linseed oil forms a higher gloss coating. The stability of the dispersions of the two examples will also be compared. All percentages listed below are in weight percent (wt. %) of the polyurethane prepolymer, or the polyurethane dispersion, as indicated in the headings of each table below. The prepolymer of examples 1 and 2 were made with the following materials:

**Table 1: Prepolymers of examples 1 and 2.**

| Prepolymer phase | | | | | |
|---|---|---|---|---|---|
| | | Inventive Example 1 | | Inventive Example 2 | |
| *Item #:* | *Material* | *Wt Amt (gr)* | *Wt* % | *Wt amt (gr)* | *Wt %* |
| 1 | Diexter - 35 | 64.4 | 19.27 | 64.4 | 19.27 |
| 2 | DMPA | 9.4 | 2.81 | 9.4 | 2.81 |
| 3 | MEK | 51.8 | 15.50 | 51.8 | 15.50 |
| 4 | Desmodur W | 48.1 | 14.39 | 48.1 | 14.39 |
| 5 | Reaxis C716LV | 0.3 | 0.09 | 0.3 | 0.09 |
| 6 | TEA | 7.4 | 2.21 | 7.4 | 2.21 |
| 7 | Tergitol 15-S-3 | 15.1 | 4.52 | 15.1 | 4.52 |
| 8 | Tung oil | 95.5 | 28.58 | --------- | 28.58 |
| 9 | Linseed oil | --------- | 0.00 | 95.5 | 0.00 |
| 10 | DPnB | 42.0 | 12.57 | 42.0 | 12.57 |
| 11 | Oxycoat 1101 | 0.17 | 0.05 | 0.17 | 0.05 |
| | (total) | 334.17 | 100 | 334.17 | 100 |
| *Prepolymer (Items 1 to 5)* | | | | | |
| *NCO:OH* | | *2.0* | | *2.0* | |
| *Theoretical NCO %* | | 4.398 | | 4.398 | |

| Polyurethane dispersion phase | | | | | |
|---|---|---|---|---|---|
| | | Inventive Example 1 | | Inventive Example 2 | |
| *Item* #: | *Material* | *Wt Amt (gr)* | *Wt %* | *Wt amt (gr)* | *Wt %* |
| 12 | H2O | 476 | 61.80 | 476 | 61.80 |
| 13 | 85% of Prepolymer above will be dispersed | 284 | 36.87 | 284 | 36.87 |
| 14 | N2H4 | 10.2 | 1.32 | 10.2 | 1.32 |
| 15 | Defoo 3000 | 0.03 | 0.00 | 0.03 | 0.00 |
| | (total) | 770.2 | 100 | 770.2 | 100 |

### Procedure for examples 1 and 2:

The prepolymer phase of the examples are prepared in the following manner. Items 1, 2 and 3 were added into the reactor and the temperature was adjusted to 50 to 55 °C while mixing was applied. At 55 °C item 4 was added into the reactor under mixing. A slow exotherm was observed to about 60C. After exotherm was stopped, items 1-4 were (added to the reactor and) mixed for 10 minutes; and then item 5 (was added) into the reactor. A <5 °C slow exotherm was observed. Once exotherm was stopped, the reactor temperature was adjusted to 80 °C - 82 °C. Prepolymer was cooked at this temperature for 1.5 hours or until the theoretical NCO % was reached (determined by the prepolymer wet analysis, as set forth in ASTM D 2572). (The prepolymer reaction is complete when the actual NCO% of the prepolymer is between 90 to 102% of the theoretical NCO% when measured by wet analysis). Once the desired NCO range was reached, the prepolymer was cooled down to 74 °C. Item 6 was added into the prepolymer under fast mixing until item 6 was mixed homogeneously into the prepolymer. If the neutralizing agent is not mixed homogeneously throughout the prepolymer, there may be a variation in the final particle size when the prepolymer is dispersed. In dispersion, fast homogeneous mixing is preferred, in order to break up the prepolymer into water or the opposite as fast as possible to avoid "freezing" of the prepolymer and ending up with undispersed prepolymer into the dispersion phase. Preferably, during fast mixing a significant presence of vortex would be observed. Usually a 10 minute fast mix is sufficient for the amounts used in the examples. Next, item 7 was added under mixing followed by item 8 (tung oil for inventive example 1) or item 9 (linseed oil for inventive example 2), followed by item 10 and item 11. Total mixing time between item 6-11 addition is about a 30 minute fast mix and between 64 to 74 °C the addition temperature range. Items 6-11 should be mixed well and homogeneously.

For the polyurethane dispersion phase, item 12 was added in a dispersion beaker (2000 ml) with good mixing and the temperature was adjusted to 22 to 24 °C. The prepolymer (Item 13 which is 85% of the total prepolymer, that was prepared in the prepolymer phase) was dispersed into the water (item 12) adjusting the mixing to improve the dispersing of the prepolymer if necessary while keeping the temperature of the dispersion below 35 °C. After the desired prepolymer amount was dispersed (item 13), the dispersion was mixed for another 5 minutes and item 14 was added to chain extend the polyurethane. Mixed for 45 minutes, added item 15 and then the MEK/H2O was stripped off to the desired polyurethane solids, with the use of a rotovap device from Buchi. A different distillation column set up can be used instead, if available. Filtered the sample with 100 micron paper filter.

For example 1 the following dispersion properties were measured after MEK stripping. pH=7.4, viscosity=288 cP, solids %=41.8, particle size=244 nm. Solids % aim is decided on personal preference and based on good processability/workability of the sample. Gloss at 20/60/85 degrees was 0.1/0.5/46.5.

### The gloss values and stability were determined the following same way for all examples:

### Gloss measuring method and film inspection:

1. Sample was mixed well and a 0.127 mm (5 mil) draw down bar was taken. A wet film of example sample was applied on a paper black Leneta chart. The film was dried for 24-48 hours at room temperature.
2. The dried film was inspected to look for smooth, even, uniform gloss coating. The observations of the film were made for comparison. A BYK Gardner Micro-TRI meter was used to record 20/60/85 gloss measurements for comparison.

### Stability Testing Method:

### At Room Temperature:

1. The example sample was mixed well.
2. A 100 ml glass jar was filled with the example sample.
3. The sample sat at room temperature for two days without being disturbed.
4. After 2 days the sample was visually inspected for two layer oil separation or incompatibility. The dispersion was also inspected to determine if it was visually homogeneous. (For example when a mixture of water and oil is present in a beaker, after some time a distinct layer between the two liquids is formed, with the oil layer floating on top of the water layer. That usually happens because the less dense liquid will float on top of the more dense liquid beneath it). In PUDs the color of the two layers might be similar, but there would be a distinct layer separation.
5. Any other visual differences were recorded, for comparison between example samples. *At* 52 *°C oven:*
6. The 100 ml glass jar sitting at room temperature with example sample was placed into a 52 °C oven for one week without being disturbed.
7. After one week the sample was taken out of the oven without disturbing or mixing it, and it was allowed to sit for a day.
8. The next day the sample was visually inspected for two layer oil separation or incompatibility. The dispersion was also inspected to determine if it was visually homogeneous.
9. Any other visual differences were recorded, for comparison between example samples.

For example 2 (dispersion with linseed oil) the following dispersion properties were obtained after MEK stripping. pH=7.2, viscosity=98 cP, solids %=40.9, particle size=351 nm. Gloss at 20/60/85 degrees was 14.5/45.0/97.3.

### Summary of comparison of Example 1 and 2:

| at Room Temperature (RT) after two days: | *Inventive Example 1* | *Inventive Example 2* |
|---|---|---|
| Sample description | Experimental sample with in process tung oil | Experimental sample with in process linseed oil |
| Sample Observation/ Comments: | No layer separation; Homogeneous dispersion. | No layer separation; Homogeneous dispersion. |
| Gloss 20/60/85 at RT | 0.1/0.5/46.5 | 14.5/45.0/97.3 |
| Film Observations/ Comments: | Smooth, uniform, grit free low gloss film. No film imperfections. | Smooth, uniform, grit free higher gloss film. No film imperfections. |
| | | |

| after one week in 52 °C oven: | *Inventive Example 1* | *Inventive Example 2* |
|---|---|---|
| Sample description | Experimental sample with in process tung oil | Experimental sample with in process linseed oil |
| Sample Observation/ Comments: | No oil layer separation or gelation; Homogeneous dispersion. | No oil layer separation or gelation; Homogeneous dispersion. |
| Gloss 20/60/85 at RT | 4.4/24.1/81.0 | 11.2/46.7/90.1 |
| Film Observations/ Comments: | Smooth, uniform, grit free low gloss film. No film imperfections. | Smooth, uniform, grit free Higher gloss film. No film imperfections. |

As shown above, examples 1 and 2 are both stable at room temperature and at 52 °C oven. Example 1, using tung oil gives lower gloss values compared to example 2, using linseed oil.

### Comparative Example 3:

The components below are a repetition of example 1 without adding tung oil or any other oil into the recipe. This example 3 dispersion will be used as a blending resin with tung oil to compare gloss and sample stability against example 1. All percentages listed below are in weight percent (wt. %) of the polyurethane prepolymer, or the polyurethane dispersion, as indicated in the headings of each table below.Only one TABLE

**Table 2: Prepolymer of example 3.**

| | Prepolymer phase | Comparative Example 3 | |
|---|---|---|---|
| *Item #:* | *Material* | *Wt Amt (gr)* | *Wt %* |
| 1 | Diexter G6555-35 | 64.4 | 28.83 |
| 2 | DMPA | 9.4 | 4.21 |
| 3 | MEK | 51.8 | 23.19 |
| 4 | Desmodur W | 48.1 | 21.53 |
| 5 | Reaxis C716LV | 0.3 | 0.13 |
| 6 | TEA | 7.4 | 3.31 |
| 7 | Tergitol 15-S-3 | ------- | ------- |
| 8 | Tung oil | ------- | -------- |
| 9 | Linseed oil | ------- | ------- |
| 10 | DPnB | 42.0 | 18.80 |
| 11 | Oxycoat 1101 | -------- | -------- |
| | (total) | 223.4 | 100 |

### Prepolymer (Items 1 to 5)

| | | | |
|---|---|---|---|
| *NCO:OH* | | | *2.0* |
| *Theoretical NCO* % | | | *4.398* |

| | Polyurethane Dispersion phase | Comparative example 3 | |
|---|---|---|---|
| *Item* #: | *Material* | *Wt Amt (gr)* | *Wt %* |
| 12 | H2O | 476 | 70.38 |
| 13 | 85% of Prepolymer above will be dispersed | 189.9 | 28.08 |
| 14 | N2H4 | 10.4 | 1.54 |
| 15 | Defoo 3000 | 0.03 | 0.00 |
| | (total) | 676.4 | 100 |

### Procedure for comparative example 3:

The prepolymer phase of the comparative example 3 was prepared in the following manner. Items 1, 2 and 3 were added into the reactor and the temperature was adjusted to 50 to 55 °C while mixing was applied. At 55 °C item 4 was added into the reactor under mixing. A slow exotherm was observed to about 60 °C. After exotherm was stopped, items 1-4 were mixed for 10 minutes and item 5 was added into the reactor. A <5 °C slow exotherm was observed. Once exotherm was stopped, the reactor temperature was adjusted to 80 to 82 °C. The prepolymer was cooked at this temperature for 1.5 hours or until the theoretical NCO % was reached (determined by the prepolymer wet analysis). (The prepolymer reaction is complete when the actual NCO% of the prepolymer is between 90 to 100% of the theoretical NCO% when measured by wet analysis). Once the desired NCO range was reached, the prepolymer was cooled down to 74 °C. Item 6 was added into the prepolymer under fast mixing until item 6 was mixed homogeneously into the prepolymer. Usually a 10 minute fast mix is sufficient for the amounts used in the examples. Next, item 10 was added under mixing and mixing continued for 5 minutes. Total mixing time between item 6 and item 10 addition was about a 15 minute fast mix at a temperature between 64 to 74 °C the addition temperature range. Items 6, 10 should be mixed well and homogeneously.

For the polyurethane dispersion phase, Item 12 was added in a dispersion beaker (2000 ml) with good mixing and the temperature was adjusted to 22 to 24 °C. The prepolymer (Item 13 which is 85% of the total prepolymer) was dispersed into the water (item 12) adjusting the mixing to improve the dispersing of the prepolymer if necessary while keeping the temperature of the dispersion below 35 °C. The remaining (undispersed residual) prepolymer was discarded. After the desired prepolymer amount was dispersed, the dispersion was mixed for another 5 minutes and then item 14 was added to chain extend the polyurethane. The dispersion was mixed for 45 minutes, prior to the addition of item 15; and then the MEK/ H₂O was stripped off to the desired polyurethane solids, with the use of a rotovap device from Buchi. A different distillation column set up can be used instead, if available. The dispersion was filtered through 100 micron paper filter. For comparative example 3 the following properties were measured after MEK stripping. pH=7.4, viscosity=14 cP, solids %=25.6, particle size=42 nm. Gloss at 20/60/85 degrees was 73.6/86.9/105.

### Comparative Example 4:

The components below are a blend of the dispersion from comparative example 3 and tung oil, without incorporation of the tung oil in the polyurethane particle as described above in example 1. This comparative example 4 blend will be used for comparison with example 1 (in process tung oil) for low gloss and stability.

**Table 3: Comparative example 4 is made by blending comparative example 3 dispersion with tung oil**

| *Addition Order #:* | Material: | Amount (gr): | Solids (gr): |
|---|---|---|---|
| 1 | Example 3 sample | 90 | 23.004 |
| 2 | Tung oil | 20 | 20 |
| 3 | Tergitol 15-S-3 | 3.2 | 3.2 |
| 4 | Byk 345 | 0.25 | 0.25 |
| 5 | Oxycoat 1101 | 0.034 | 0 |
| | | | |
| Total: | | 113.45 | 46.45 |

| | | | |
|---|---|---|---|
| Formulation solids % = 40.95 | | | |

### Procedure for comparative example 4:

The blending sample (comparative example 4) is prepared in the following manner. Item 1 was added into an 8 oz beaker under good mixing. Next, Item 2 was added slowly, followed by item 3, 4 and 5 within 5 minute mixing intervals. Following the addition of item 5, the sample was mixed for extra 15 minutes. The sample was filtered through 100 micron paper filter.

For comparative example 4 the following properties were measured. pH=7.4, viscosity=30 cP, solids %=40, particle size=60 nm. Gloss at 20/60/85 degrees was 0.8/4.8/8.7.

The following materials were at very similar amounts for example 1 and 4 for fair comparison. Tung oil amount is about 40-42% on dispersion solids for example 1 and 4. Tergitol 15-S-3 surfactant is about 16% of the tung oil amount in examples 1 and 4. Also, final sample solids are about 41-42% for examples 1 and 4.

A comparison table between inventive example 1, comparative example 3 and comparative example 4 is shown below:

### Samples tested at Room Temperature:

| Samples: | Inventive Example 1 | Comparative Example 3 | Comparative Example 4 |
|---|---|---|---|
| Sample description: | In process Tung oil sample | Without oil added sample | Example 3 blended with Tung oil |
| Sample Observations: | No oil layer separation after 2 days at RT. Homogeneous dispersion. | No layer separation after 2 days at RT. Homogeneous (bluish transparent color) dispersion. | Two layer separation after 2 days at RT. Top layer is tung oil (honey color) and bottom layer is Example 3 sample (bluish transparent color). |
| Gloss 20/60/85 at RT: | 0.1/0.5/46.5 | 73.6/86.9/105 | 0.8/4.8/8.7 |
| Dried Film Observations: | Smooth uniform low gloss film. No film imperfections. | Smooth uniform high gloss film. No film imperfections. | Film consists of a lot of small spots of non-uniform low and higher gloss coating. Rough and uneven film texture feel. A lot of grit and film imperfections. |

### Samples tested after 1 week in 52 °C oven:

| Samples: | Inventive Example 1 | Comparative Example 3 | Comparative Example 4 |
|---|---|---|---|
| Sample description: | In process Tung oil sample | Without oil added sample | Example 3 blended with Tung oil |
| Sample Observations: | No layer separation; Homogeneous dispersion. | No layer separation; Homogeneous (bluish transparent color) dispersion. | Two layer separation; Top layer is tung oil (honey color). It feels gritty/chunky. Bottom layer is Example 3 sample (bluish transparent color). |
| Gloss 20/60/85 after 1 week in 52 °C oven: | 4.4/24.1/81.0 | 73.0/87.2/97.8 | 3.5/20.9/43.3 |
| Dried Film Observations: | Smooth uniform low gloss film appearance. No film imperfections. | Smooth uniform high gloss film appearance. No film imperfections. | Film consists of a lot of small spots of non-uniform low and higher gloss coating. Rough and uneven film texture feel. A lot of grit and film imperfections. |

As shown above, inventive example 1 and comparative example 3 are both stable at room temperature and at 52°C oven, while comparative example 4 is unstable at RT and 52 °C oven. The tung oil in comparative example 4 separates from the PUD (blended with comparative example 3) compared to inventive example 1 where the tung oil is suspended into the PUD particle and stays intact. While the quality of the film of comparative example 3 was acceptable, it did not contain any oil. The high gloss film appearance of comparative example 3 was less preferable to the low gloss film appearance of inventive example 1. In addition, comparative example 3 does not include any of the other benefits of including oil, such as gaining additional biological content, or less petroleum-based content to the polyurethane dispersion, or saving on higher cost ingredients that are used to make the polyurethane dispersion. Even though the dried film of comparative example 4 has low gloss values, the quality of the dried film is unacceptable and of a bad quality. As mentioned earlier, these examples were made with the same amount of tung oil, surfactant and final dispersion solids for a fair comparison.

## Claims

1. A process for preparing an polyurethane aqueous dispersion comprising
(I) preparing a polyurethane pre-polymer comprising as building blocks:
(a) a polyisocyanate, preferably comprising at least two cyclic groups,
(b) a polyol, preferably comprising at least one polyol selected from the group consisting of polyester polyols, polyether polyols, polycarbonate polyols, and
(c) an acid that comprises at least one isocyanate reactive group;
(II) adding (e) an oil, preferably tung oil added in an amount of 20 - 50 wt. % of the polyurethane prepolymer, based on the total weight of the polyurethane prepolymer being 100 wt. %;
(III) cooking and optionally mixing the polyurethane prepolymer and the oil for 20 minutes to 10 hours, at a temperature of 30 - 130 °C, preferably for 30 minutes to 8 hours, at a temperature of 50 - 100 °C; and
(IV) combining water with the polyurethane prepolymer,
wherein a majority of the water that is added to the dispersion is added after the addition of a majority of the oil.

2. The process of claim 1, wherein the acid that contains at least one isocyanate reactive group is selected from the group consisting of 2,2-dimethylol propionic acid (DMPA), 2,2-dimethylolbutanoic acid (DMBA), 12-hydroxy-9-cis-octadecenoic acid (ricinoleic acid) and mixture thereof.

3. The process of claim 1 or 2, wherein the acid that contains at least one isocyanate reactive group comprises an ionic water-dispersing group, which preferably has the following structural formula (1) 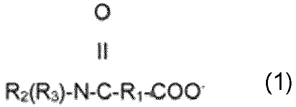 wherein
R1 is a divalent aliphatic hydrocarbon radical having from 2 to 8 carbon atoms, preferably from 3 to 6 carbon atoms, more preferably 3 or 4 carbon atoms or a divalent cycloaliphatic hydrocarbon radical having from 6 to 8 carbon atoms or a divalent aromatic hydrocarbon radical having from 6 to 8 carbon atoms, R2 and R3 are both 2-hydroxypropyl.

4. The process of any of the preceding claims, wherein the polyurethane aqueous dispersion further comprises (d) a reactive diluent, preferably wherein the reactive diluent comprises vinyl monomers selected from at least one member of the group containing free vinyl acids, esters of (meth)acrylic acid, hydroxy alkyl (meth)acrylates and styrene and optionally wherein the reactive diluent is a building block of the prepolymer.

5. The process of claim 4, wherein the reactive diluent comprises vinyl monomers and the process further comprises the step of vinyl monomer polymerization, and wherein the step of vinyl monomer polymerization is carried out in-situ by free radical addition polymerization of the vinyl monomer, and is not carried out until after step (I) of preparing the polyurethane pre-polymer.

6. The process of any of the preceding claims, wherein component (e) comprises at least 50% natural oil, preferably at least 75% natural oil, more preferably at least 90% natural oil, most preferably at least 100% natural oil, and the oil is compatible and non-reactive with the prepolymer.

7. The process of any of the preceding claims, wherein the oil is added after the at least components (a) and (b) of the polyurethane pre-polymer are mixed and heated.

8. The process of any of the preceding claims, wherein at least components (a) and (b) of the polyurethane pre-polymer mixed and heated to 40 - 95 °C, for 30 minutes - 4 hours.

9. The process of any of the preceding claims, wherein the building blocks of the prepolymer have an NCO:OH ratio of from 0.8:1.0 to 3.0:1.0.

10. The process of any of the preceding claims, further comprising reacting the polyurethane pre-polymer with component (f) an active hydrogen-containing chain extender in the aqueous phase, preferably selected from the group consisting of amino-alcohols, primary polyamines, secondary polyamines, hydrazine, substituted hydrazines and substituted hydrazides.

11. The process of claim 10, wherein the polyurethane aqueous dispersion further comprises as compound (d) a vinyl monomer, and the process further comprises the steps of chain extension and vinyl monomer polymerization, and wherein the step of vinyl monomer polymerization is carried out in-situ by free radical addition polymerization of the vinyl monomer, and is not carried out until after the step of chain extension has been carried out.

12. The process of any of the preceding claims, wherein a surfactant is further added to the polyurethane aqueous dispersion, in an amount of 5 - 30 wt. %, based on the total amount of oil being 100 wt. %, and preferably the surfactant is hydrophobic and non-ionic.

13. The process of any of the preceding claims, wherein a drying agent is further added to the polyurethane aqueous dispersion.

14. The process of any of the preceding claims, wherein a hydrophobic co-solvent is further added to the polyurethane aqueous dispersion, wherein the hydrophobic co-solvent is preferably selected from the group selected from dipropylene glycol n-butyl ether (DPnB), tripropylene glycol n-butyl ether (TPnB), propylene n-butyl ether (PnB) and propylene glycol.

15. The process of any of the preceding claims, wherein at least 70 wt. % of the water that is added to the dispersion is added after the addition of at least 70 wt. % of the oil, preferably at least 90 wt. % of the water that is added to the dispersion is added after the addition of at least 90 wt. % of the oil.

16. The process of any of the preceding claims, comprises dispersed particles comprising the polyurethane prepolymer in an amount of from 20 to 60 wt.%, more preferably from 35 to 58 wt.%, even more preferably from 40 to 57 wt.%, most preferably from 45 to 55 wt. % based on the total weight of the aqueous dispersion as 100 wt. %.

17. The process of any of the preceding claims, wherein further comprising the step of applying the polyurethane aqueous dispersion to a substrate.

18. The process of claim 17, further comprising the step of drying the polyurethane aqueous dispersion upon the substrate.

19. A method of reducing gloss to the surface of the substrate of claim 18, wherein component (e) is tung oil.
